# EUROPÄISCHE PATENTSCHRIFT

(11) **EP 3 251 199 B1**
(45) Veröffentlichungstag und Bekanntmachung des Hinweises auf die Patenterteilung: **14.08.2019**
(21) Anmeldenummer: 16702402.5
(22) Anmeldetag: 29.01.2016
(51) Int. Cl.: H02K 7/116, B60K 1/00, F16H 57/04, H02K 7/02, H02K 19/06, H02K 16/00, H02K 49/00, F16H 3/72

(54) **ELEKTROANTRIEBSANORDNUNG**
ELECTRIC DRIVE ARRANGEMENT
DISPOSITION DE PROPULSION ÉLECTRIQUE

(30) Priorität: 30.01.2015 DE 102015101367
(43) Veröffentlichungstag der Anmeldung: 06.12.2017
(73) Patentinhaber: GKN AUTOMOTIVE LTD., Redditch Worcestershire B98 0AJ (GB)
(72) Erfinder: GASSMANN, Theodor, 53721 Siegburg (DE)
(74) Vertreter: Neumann Müller Oberwalleney & Partner Patentanwälte
(86) Internationale Anmeldenummer: PCT/EP2016/051981
(87) Internationale Veröffentlichungsnummer: WO 2016/120472

(56) Entgegenhaltungen:
- DE-A1-102009 045 869
- DE-A1-102011 084 092
- GB-A- 2 363 173
- GB-A- 2 405 129
- US-A- 4 159 434
- US-A- 5 929 548

## Beschreibung

Die Erfindung betrifft einen Elektroantrieb zum Antreiben einer Antriebsachse eines Kraftfahrzeugs sowie ein Verfahren zum Ansteuern eines Elektroantriebs. Üblicherweise umfasst ein Elektroantrieb einen Elektromotor und ein nachgelagertes Übersetzungsgetriebe, das eine eingeleitete Drehbewegung vom Schnellen ins Langsame übersetzt. Das Übersetzungsgetriebe ist mit einem nachgelagerten Differentialgetriebe antriebsverbunden, welches das eingeleitete Drehmoment auf zwei Seitenwellen zum Antreiben der Fahrzeugräder einer Fahrzeugachse aufteilt.

Ein solcher Elektroantrieb kann als alleinige Antriebsquelle für das Kraftfahrzeug dienen oder zusätzlich zu einem Verbrennungsmotor vorgesehen sein, wobei der Elektroantrieb und der Verbrennungsmotor jeweils für sich oder gemeinsam überlagert das Kraftfahrzeug antreiben können. Derartige Antriebskonzepte mit zwei Antriebsquellen werden auch als "Hybridantrieb" bezeichnet.

Aus der GB 2 405 129 A ist eine Anordnung gemäß dem Oberbegriff des Anspruchs 1 bekannt. Die Anordnung ist in Form eines stufenlos variablen Getriebes gestaltet und umfasst einen Hohlrad-Motor-Generator und einen Hochgeschwindigkeits-Motor-Generator, die über ein Planetengetriebe miteinander verbunden sind. Der Hochgeschwindigkeits-Motor-Generator ist in einem zentralen Gehäuseabschnitt aufgenommen und mit einer Hochgeschwindigkeitswelle verbunden, die sich durch eine Gehäusewand hindurch in einen separaten, vakuumisierten Gehäuseabschnitt hineinerstreckt. Der zentrale Gehäuseabschnitt, in dem der Hochgeschwindigkeits-Motor-Generator aufgenommen ist, und der Gehäuseabschnitt, in dem die Rotormasse der Welle angeordnet ist, sind mittels einer Vakuumdichtung gegeneinander abgedichtet. An der der Rotormasse entgegengesetzten Seite des Hochgeschwindigkeits-Motor-Generators schließt sich ein weiterer separater Gehäuseabschnitt an, in dem das Planetengetriebe und der Hohlrad-Motor-Generator angeordnet sind. Der Hohlrad-Motor-Generator ist seitlich benachbart zum Planetengetriebe auf einem Hülsensatz des Hohlradgehäuses angeordnet. Das Hohlradgehäuse bzw. das damit verbundene Hohlrad des Planetengetriebes sind über Lager auf der Hochgeschwindigkeitswelle bzw. der Eingangs-/Ausgangswelle drehbar gelagert.

Aus der DE 10 2009 045 869 A1 ist ein Antriebssystem mit einem ersten Elektromotor, einem zweiten Elektromotor, einem Umrichter und einem Verzweigungsgetriebe in Form eines Planetengetriebes bekannt. Der Umrichter steuert den zweiten Elektromotor zur Erzeugung einer variablen Drehzahl und/oder eines variablen Drehmoments an. Das Planetengetriebe umfasst drei Planetenräder, die über einen Planetenträger verbunden sind, ein Sonnenrad sowie ein Hohlrad. Das Hohlrad bildet eine erste Eingangswelle, die mit dem ersten Elektromotor gekoppelt ist. Das Sonnenrad bildet eine zweite Eingangswelle, die mit dem zweiten Elektromotor gekoppelt ist. Der Planetenträger bildet eine Abtriebswelle. Der mit dem Hohlrad verbundene erste Elektromotor ist als Synchronmotor gestaltet, der direkt durch eine Netzwechselspannung gespeist wird, so dass er mit einer konstanten Drehzahl dreht. Die Drehzahl des ersten Synchronmotors wird mit beispielsweise konstant 3000 Umdrehungen pro Minute angegeben. Der zweite Synchronmotor soll beispielsweise für einen Drehzahlbereich -6000 bis +6000 Umdrehungen pro Minute ausgelegt sein.

Aus der GB 2 363 173 A ist ein Getriebe mit einem ersten Elektromotor, einem zweiten Elektromotor und zwei Planeteneinheiten bekannt. Es ist ein Primärantrieb in Form eines Verbrennungsmotors vorgesehen, der ein Schwungrad antreibt. Das Schwungrad ist mit einem Planetenträger der ersten Planeteneinheit verbunden, der wiederum mit dem Hohlrad der zweiten Planeteneinheit verbunden ist. Das Hohlrad der ersten Planeteneinheit ist mit dem ersten Elektromotor verbunden. Das Sonnenrad der zweiten Planeteneinheit ist mit dem zweiten Elektromotor verbunden. Der Planetenträger der zweiten Planeteneinheit ist mit einer Ausgangswelle verbunden. Das Getriebe hat somit vier Anschlusselemente, nämlich das extern angetriebene Schwungrad, das mit dem ersten Elektromotor verbundene erste Hohlrad, das mit dem zweiten Elektromotor verbundene zweite Sonnenrad und den zweiten Planetenträger. Die Drehzahl des zweiten Elektromotors, der als geschalteter Reluktanzmotor gestaltet ist, wird mit maximal 16.000 Umdrehungen pro Minute angegeben.

Aus der WO 2012/007030, entsprechend DE 11 2010 005 738 T5, ist ein Elektroantrieb für ein Kraftfahrzeug bekannt, der einen Elektromotor und eine Getriebeeinheit umfasst. Die Getriebeeinheit weist ein Planetengetriebe und ein Differentialgetriebe auf, die koaxial zueinander angeordnet sind. Das Planetengetriebe weist zwei Planetenradstufen mit unterschiedlichen Übersetzungsverhältnissen auf, die jeweils ein Sonnenrad, mehrere Planetenräder und ein Hohlrad aufweisen. Die Sonnenräder der Planetenradstufen werden vom Elektromotor angetrieben. Die Planetenräder sind über einen Planetenträger mit dem Differentialkorb verbunden. Die Hohlräder können mittels einer Kupplungsanordnung optional gegenüber einem ortsfesten Gehäuse abgebremst werden, wodurch sich unterschiedliche Übersetzungsverhältnisse realisieren lassen.

Aus der DE 10 2013 206 650 A1 ist eine elektrische Antriebseinheit für ein Kraftfahrzeug bekannt. Die Antriebseinheit umfasst einen Rotor, einen Stator, einen ersten Planetenradsatz, einen zweiten Planetenradsatz und einen Eingriffsmechanismus mit einer Kupplungsbremse. Die Kupplungsbremse kann eine Scheibenkupplung, Magnetpulverkupplung, eine Kupplung mit magnetorheologischem Fluid oder eine Bandbremse sein.

Aus der DE 10 2011 100 596 A1 ist eine Drehmomentübertragungseinrichtung mit einer Antriebswelle, einer Abtriebswelle und einem zwischengeschalteten Planetenradsatz bekannt. Der Planetenradsatz weist einen mit der Antriebswelle verbundenen Planetenträger, mehrere Planetenräder und ein mit der Abtriebswelle verbundenes Sonnenrad auf

Aus der US 2 071 943 ist eine elektromagnetische Kupplung für den Antriebsstrang eines Kraftfahrzeugs bekannt, mit der eine Antriebswelle und eine Abtriebswelle weich aneinander gekoppelt werden können.

Aus der FR 2 997 047 A1 ist ein Elektroantrieb für ein Kraftfahrzeug mit einem Planetengetriebe und zwei Elektromotoren bekannt. Das Planetengetriebe weist ein Sonnenrad, einen Planetenträger, mehrere Planetenräder und ein Hohlrad auf. Der erste Elektromotor ist mit dem Sonnenrad antriebsverbunden, und der zweite Elektromotor ist mit dem Hohlrad antriebsverbunden. Das Sonnenrad ist mit einem Radkranz fest verbunden, der mittels einer ersten Bremsvorrichtung gegenüber einem Gehäuse abbremsbar ist. Eine zweite Bremsvorrichtung umfasst eine äußere Ringfläche des Hohlrades, um dieses gegenüber dem Gehäuse abzubremsen.

Elektroantriebe haben bei sehr niedrigen und sehr hohen Geschwindigkeiten eine relativ geringe Effizienz. Bei geringen Fahrzeuggeschwindigkeiten liegt ein hoher Motorstrom an, wobei das Ausgangsdrehmoment des Elektromotors jedoch sehr niedrig ist. Bei hohen Geschwindigkeiten steigen die Verluste des Elektromotors, wodurch die Effizienz sinkt.

Derzeit geht der Trend hin zu Elektromotoren mit höheren Drehzahlen, zu Elektroantrieben mit Abschaltsystemen, um den Elektromotor bei höheren Fahrzeuggeschwindigkeiten von den Rädern abzukoppeln, sowie zu Elektroantrieben mit variabel einstellbarer Geschwindigkeit (Multispeed-Funktion). Heutige Elektroantriebe sind bisweilen auf mehr als das Doppelte des Motor-Nennmoments ausgelegt, um hohen Drehmomentspitzen im Antriebsstrang standzuhalten, die durch hohe Motorträgheit gepaart mit einer hohen Steifigkeit des Antriebsstrangs verursacht werden.

Vor diesem Hintergrund liegt der vorliegenden Erfindung die Aufgabe zugrunde, einen Elektroantrieb vorzuschlagen, der eine hohe Effizienz aufweist und eine sanfte Schaltbarkeit ermöglicht. Die Aufgabe besteht ferner darin, ein Verfahren zur Steuerung einer solchen Elektroantriebsanordnung vorzuschlagen, mit dem ein energieeffizienter Antrieb ermöglicht wird.

Eine Lösung besteht in einer Elektroantriebsanordnung für ein Kraftfahrzeug, umfassend: eine elektrische Maschine zum Antreiben einer Antriebsachse des Kraftfahrzeugs, wobei die elektrische Maschine als Hochgeschwindigkeits-Elektromaschine mit einer Nenndrehzahl von mindestens 20.000 Umdrehungen pro Minute gestaltet ist und einen Hochgeschwindigkeitsrotor aufweist, der als Schwungmasse zur Speicherung kinetischer Energie verwendbar ist; ein Überlagerungsgetriebe mit einem Antriebselement, einem Stellelement und einem Abtriebselement, wobei das Antriebselement von der elektrischen Maschine um eine Antriebsachse drehend antreibbar ist, wobei das Stellelement um eine Stellachse drehbar ist und wobei das Abtriebselement mit dem Stellelement und dem Antriebselement antriebsverbunden ist; eine elektromagnetische Stellvorrichtung zum Einstellen einer Drehzahl des Stellelements, wobei die elektromagnetische Stellvorrichtung einen Stator aufweist, der mit einem ortsfesten Bauteil verbunden ist, und einen Rotor, der mit dem Stellelement drehfest verbunden ist, wobei der Rotor und der Stator berührungslos zueinander angeordnet sind, wobei die elektromagnetische Stellvorrichtung ausgestaltet ist, um durch in Umfangsrichtung zwischen dem Stator und dem Rotor wirkende magnetische Kräfte ein Stellmoment auf den Rotor zu übertragen, wobei die magnetischen Kräfte variabel einstellbar sind; wobei die Hochgeschwindigkeits-Elektromaschine in einem abgedichteten trockenen ersten Aufnahmeraum angeordnet ist, wobei ein Innendruck im ersten Aufnahmeraum geringer ist als ein Umgebungsdruck; und wobei die elektromagnetische Stellvorrichtung und das Überlagerungsgetriebe in einem abgedichteten mit Schmiermittel befülltem zweiten Aufnahmeraum angeordnet sind, wobei das Überlagerungsgetriebe koaxial und radial innerhalb der elektromagnetischen Stellvorrichtung angeordnet ist.

Die Elemente des Überlagerungsgetriebes sind miteinander zur Übertragung von Drehmoment antriebsverbunden. Dabei soll die Formulierung drehend antreibbar oder antriebsverbunden vorliegend jeweils die Möglichkeit mit umfassen, dass zwischen einem antreibenden Element und einem hiervon drehend angetriebenen Element ein oder mehrere weitere Bauteile im Leistungspfad zwischengeschaltet sein können.

Ein Vorteil der Elektroantriebsanordnung besteht darin, dass diese aufgrund der Verwendung der elektromagnetischen Stellvorrichtung, welche magnetische Kräfte berührungslos überträgt, nur geringe Schleppverluste und damit eine hohe Effizienz aufweist. Des Weiteren bietet der Elektroantrieb durch die Ausgestaltung der Stellvorrichtung einen Überlastschutz. Wenn das Gesamtdrehmoment im Antriebsstrang der Elektroantriebsanordnung die eingestellte Spannung der Stellvorrichtung übersteigt, dreht der Rotor relativ zum Stator. Auf diese Weise können Drehmomentspitzen im Antriebsstrang verschleißfrei kompensiert werden. Ein weiterer Vorteil liegt darin, dass die elektromagnetische Stellvorrichtung so gesteuert werden kann, dass sich hiermit die Drehzahl beziehungsweise das Drehmoment des Antriebstrangs des Elektroantriebs variabel einstellen beziehungsweise steuern lassen, ohne die Eingangsdrehzahl beziehungsweise das Eingangsmoment der Hochgeschwindigkeits-Elektromaschine zu verändern. Die Hochgeschwindigkeits-Elektromaschine, die als primäre Antriebsquelle für den Elektroantrieb dient, kann damit in einem Kennlinienbereich mit besonders hoher Effizienz arbeiten.

Die Ausgestaltung der primären Antriebsquelle in Form einer Hochgeschwindigkeits-Elektromaschine hat den Vorteil, dass diese eine besonders große Menge an kinetischer Energie speichern kann, welche dann in Form mechanischer Energie wieder in das System eingeleitet werden kann oder in elektrische Energie umgewandelt und in einer Batterie gespeichert werden kann. Insgesamt vereinigt der Elektroantrieb die Vorteile einer hohen Effizienz und langen Lebensdauer bei kompakter Bauweise.

Die kinetische Energie liegt in Form von Rotationsenergie des rotierenden Hochgeschwindigkeitsrotors vor. Dabei hängt die Speicherkapazität der Elektromaschine von der Drehzahl und der Massenträgheit des Hochgeschwindigkeitsrotors ab. Je nach benötigter Speicherkapazität kann gegebenenfalls eine Zusatzmasse vorgesehen sein, die direkt oder indirekt über eine Antriebswelle mit dem Hochgeschwindigkeitsrotor fest verbunden ist, so dass sie gemeinsam mit diesem rotiert. In diesem Fall bilden der Hochgeschwindigkeitsrotor und die Zusatzmasse gemeinsam die Schwungmasse zur Speicherung kinetischer Energie. Nach einer Ausgestaltung kann der Hochgeschwindigkeits-Elektromaschine derart gestaltet sein, dass der Hochgeschwindigkeitsrotor eine kinetische Energie von mindestens 50 Kilojoule speichern kann, insbesondere mindestens 100 Kilojoule. Hiermit sollen die Möglichkeiten mit umfasst sein, dass die Speicherkapazität allein durch den Rotor bestimmt wird, das heißt keine Zusatzmasse vorgesehen ist, oder, dass der Rotor gemeinsam mit einer angeschlossenen Zusatzmasse die genannte Speicherkapazität aufweist.

Es ist vorgesehen, dass die Größe der von der Stellvorrichtung erzeugten magnetischen Kräfte variabel einstellbar beziehungsweise regelbar ist. Hiermit soll insbesondere mit umfasst sein, dass die magnetischen Kräfte auf null einstellbar sind, so dass der Rotor gegenüber dem Stator kraftfrei drehen kann, ferner auf einen Maximalwert, bei dem ein maximales Stellmoment in den Rotor eingeleitet wird, sowie stufenlos auf jeden Zwischenwert zwischen Null und dem Maximalwert. Der Maximalwert kann so ausgelegt sein, dass der Rotor gegenüber dem Stator abgebremst wird und in entgegengesetzter Richtung dreht wie das Antriebselement des Überlagerungsgetriebes, der Rotor drehfest zum Stator gehalten wird, oder der Rotor relativ zum Stator angetrieben wird und in derselben Richtung dreht wie das Antriebselement des Überlagerungsgetriebes. In der Einstellung, in welcher der Rotor gegenüber dem Stator drehfest gehalten ist, wird das von der Hochgeschwindigkeits-Elektromaschine eingeleitete Drehmoment von der Stellvorrichtung in Umfangsrichtung abgestützt und vollständig auf das Abtriebselement übertragen. Dadurch, dass die zwischen Stator und Rotor wirkenden Magnetkräfte stufenlos einstellbar beziehungsweise regelbar sind, wird eine stufenlose Einstellung des auf das Stellelement übertragbaren Stellmoments beziehungsweise der Drehzahl des Stellelements erreicht. Auf diese Weise lässt sich mit der elektromagnetischen Stellvorrichtung die Drehzahl des Abtriebselements durch entsprechendes Steuern der magnetischen Kräfte regeln.

Das Überlagerungsgetriebe hat zumindest drei Anschlusselemente, nämlich das Antriebselement zum Einleiten von Drehmoment von der primären Antriebsquelle, das Abtriebselement zur Drehmomentübertragung auf eine Antriebsachse des Kraftfahrzeugs und das Stellelement zur Steuerung des Drehmoments beziehungsweise der Drehzahl im Antriebstrang. Von den drei Anschlusselementen sind zwei voneinander unabhängig drehbar, das heißt das Getriebe hat zwei Freiheitsgrade. Hieraus resultiert, dass voneinander unabhängige Drehbewegungen von zwei der drei Anschlusselemente einander überlagert werden können, weswegen das Getriebe als Überlagerungsgetriebe bezeichnet wird. Konkret ist vorgehen, dass das Stellelement des Überlagerungsgetriebes mit der Stellvorrichtung wirkverbunden ist. Die Stellvorrichtung ermöglicht durch entsprechendes Einwirken auf die Drehbewegung des Stellelements eine variable Steuerung der Drehzahl beziehungsweise des Drehmoments des Antriebsstrangs. Erfindungsgemäß ist die Hochgeschwindigkeits-Elektromaschine in einem abgedichteten trockenen ersten Aufnahmeraum angeordnet. Hiermit ist insbesondere gemeint, dass die Hochgeschwindigkeits-Elektromaschine nicht in einem Schmiermittel läuft. Auf diese Weise können Reibungsverluste gering gehalten werden. Der Innendruck im ersten Aufnahmeraum ist geringer als der Umgebungsdruck und liegt insbesondere bei weniger als 100 Millibar. In Ergänzung ist die elektromagnetische Stellvorrichtung in einem abgedichteten und zumindest teilweise mit Schmiermittel befülltem zweiten Aufnahmeraum angeordnet. Hierdurch wird eine gute Schmierung der elektromagnetischen Stellvorrichtung erreicht. Sofern die Hochgeschwindigkeits-Elektromaschine trocken laufend und die elektromagnetische Stellvorrichtung nasslaufend ist, sind die beiden Aufnahmeräume durch entsprechende Dichtmittel gegeneinander abgedichtet. Die beiden Aufnahmeräume können voneinander fluidisch getrennte Kammern eines gemeinsamen Gehäuses der Elektroantriebsanordnung sein.

Die Stellvorrichtung kann insbesondere eine elektromagnetische Kupplung oder eine elektrische Maschine aufweisen. Bei beiden Ausführungen ist die Stellvorrichtung derart gestaltet, dass das auf das Stellelement einwirkende Drehmoment, respektive Bremsmoment variabel steuerbar ist. Insbesondere kann die Stellvorrichtung derart gesteuert werden, dass das Stellelement und der damit verbundene Rotor frei drehen können, das heißt drehmomentfrei sind, oder im Drehsinn relativ zu einem ortsfesten Bauteil abgestützt sind, das heißt drehfest gehalten, oder in jede beliebige Zwischenstellung einstellbar, in der das Stellelement teilweise gegenüber dem ortsfesten Bauteil abgebremst wird. Die Größenverhältnisse der Anordnung können derart sein, dass der Stator der Stellvorrichtung einen größten Außendurchmesser aufweist, der größer sein kann als der Außendurchmesser des größten Antriebsrads des Überlagerungsgetriebes, das koaxial zur Drehachse angeordnet ist. In weiterer Konkretisierung kann der Stator der Stellvorrichtung einen kleinsten Innendurchmesser aufweisen, der größer ist als ein größter Außendurchmesser des größten Antriebsrads des Überlagerungsgetriebes. Durch diese Ausgestaltung liegt der Stator auf einem relativ großen Durchmesser, so dass die Bremskräfte in der Stellvorrichtung verhältnismäßig gering sind.

Bei der Ausgestaltung der Stellvorrichtung mit elektromagnetischer Kupplung ist insbesondere vorgesehen, dass der Stator der Stellvorrichtung eine Vielzahl von über den Umfang verteilten Stator-Polen und der Rotor eine Vielzahl von über den Umfang verteilten Rotor-Polen aufweist, wobei die Anzahl der Stator-Pole und die Anzahl der Rotor-Pole gleich sein kann. Der Rotor kann aus magnetischem Material wie Weicheisen oder Elektroblech bestehen. Der Stator weist eine Magnetspule auf, die durch Bestromen ein Magnetfeld erzeugt, das auf den Rotor einwirkt.

Die Magnetspule wird mittels einer elektronischen Regeleinheit gesteuert, wobei das Kupplungsmoment durch Steuerung des durch die Magnetspule fließenden Stromes variabel einstellbar ist. Das Ansprechverhalten der elektromagnetischen Kupplung ist extrem schnell, entsprechend dem Aufbau des Magnetfeldes. Konkret wird die Drehzahl des Rotors durch Pulsieren des Stroms der Magnetspule eingestellt, wobei durch entsprechendes Steuern des Stromes ein weiches Zu- und Abschalten der Kupplung und eine präzise Regelbarkeit des Kupplungsmoments realisierbar sind. In abgeschaltetem, das heißt nicht-bestromtem Zustand der Magnetspule kann der Rotor gegenüber dem Stator frei drehen. Dabei sind die Schleppmomente der elektromagnetischen Kupplung extrem niedrig, nämlich nur bedingt durch die Luft- beziehungsweise Ölreibung im Radialspalt zwischen Rotor und Stator. Für einen zugeschalteten Zustand kann der Spulenstrom so eingestellt werden, dass der Rotor relativ zum Stator stillsteht, so dass das in das Überlagerungsgetriebe eingeleitete Drehmoment abgestützt wird. Es versteht sich, dass der Spulenstrom auch auf jeden beliebigen Zwischenwert zwischen dem zu- und abgeschalteten Zustand eingestellt werden kann. Auf diese Weise lässt sich der Schlupf des Rotors gegenüber dem Stator und damit das Antriebsmoment des Elektroantriebs bedarfsweise steuern. Es ist sogar denkbar, dass der Rotor durch entsprechendes Pulsieren des Spulenstroms in geringem Maße gegenüber dem Stator angetrieben wird. Auf diese Weise kann mittels der elektromagnetischen Kupplung auch ein zusätzliches Drehmoment in das Überlagerungsgetriebe eingeleitet beziehungsweise die Drehzahl des Abtriebselements geregelt werden. Übersteigt das insgesamt in das Überlagerungsgetriebe eingeleitete Drehmoment den eingestellten Spulenstrom, so dreht sich der Rotor relativ zum Stator. Insofern arbeitet die elektromagnetische Kupplung auch als Drehmomentbegrenzungskupplung, ohne dabei einem Verschleiß zu unterliegen.

Der Stator der elektromagnetischen Kupplung kann ein erstes Ringteil und ein zweites Ringteil aus magnetischem Material aufweisen, zwischen denen die Magnetspule axial aufgenommen ist. Die Stator-Pole können durch die Zähne einer inneren Verzahnungsstruktur am Stator gestaltet sein und die Rotor-Pole können durch die Zähne einer äußeren Verzahnungsstruktur am Rotor gestaltet sein, wobei zwischen den Zahnköpfen der Stator-Pole und den Zahnköpfen der Rotor-Pole ein Radialspalt gebildet ist. Die Anzahl der Stator-Pole und der Rotor-Pole ist vorzugsweise gleich. Dabei gilt, dass je größer die Anzahl der Pole ist, desto größer ist auch das Kupplungs- beziehungsweise Bremsmoment.

Die elektromagnetische Kupplung funktioniert wie ein Reluktanzmotor, der dadurch gekennzeichnet ist, dass das Drehmoment im Rotor ausschließlich durch eine Reluktanzkraft erzeugt wird. Der Rotor eines Reluktanzmotors weist ausgeprägte Pole auf und besteht aus einem hochpermeablen, weichmagnetischen Material wie beispielsweise Elektroblech. Ein Reluktanzmotor hat in vorteilhafter Weise eine lange Lebensdauer, da er ohne verschleißanfällige Bauteile wie Schleifringe und Bürsten auskommt.

Bei der Ausgestaltung der Stellvorrichtung mit sekundärer Elektromaschine ist insbesondere vorgesehen, dass diese im Generatorbetrieb oder im Motorbetrieb mittels einer elektronischen Regeleinheit steuerbar ist. Die sekundäre Elektromaschine kann als Niedriggeschwindigkeits-Elektromaschine ausgestaltet sein, die eine relativ niedrige Nenndrehzahl von insbesondere weniger als 10.000 Umdrehungen pro Minute, aber ein vergleichsweise hohes Nenndrehmoment aufweist (Low Speed / High Torque Machine). Mit vergleichsweise hohem Nennmoment soll insbesondere mit umfasst sein, dass das Nennmoment der sekundären Elektromaschine größer ist als das Nennmoment der primären Elektromaschine, vorzugsweise mehr als doppelt so groß.

Im Generatorbetrieb kann die sekundäre Elektromaschine eine überschüssige mechanische Energie der Hochgeschwindigkeits-Elektromaschine in elektrischen Strom umwandeln. Der von der sekundären Elektromaschine im Generatorbetrieb erzeugte elektrische Strom kann nach einer ersten Möglichkeit in einer Batterie gespeichert werden oder nach einer zweiten Möglichkeit in die Hochgeschwindigkeits-Elektromaschine eingespeist werden, um diese anzutreiben. Die sekundäre Elektromaschine ist alternativ im Motorbetrieb steuerbar, wobei der Stator durch elektrische Energie angetrieben wird, um Drehmoment in das Stellelement des Überlagerungsgetriebes einzuleiten. Die elektrische Energie kann aus der Batterie entnommen oder von der Hochgeschwindigkeits-Elektromaschine bereitgestellt werden. Bei Steuerung im Motorbetrieb werden die von der Niedriggeschwindigkeits-Elektromaschine und von der Hochgeschwindigkeits-Elektromaschine erzeugten Drehmomente beziehungsweise Drehzahlen einander überlagert und gemeinsam auf das Abtriebselement übertragen. Dabei kann die Niedriggeschwindigkeits-Elektromaschine in günstiger Weise so betrieben werden, dass die Hochgeschwindigkeits-Elektromaschine in einem Bereich höchster Effizienz arbeitet.

Die sekundäre Elektromaschine ist vorzugsweise in Form einer Induktionsmaschine, das heißt Asynchronmaschine gestaltet. Alternativ kann die sekundäre Elektromaschine auch als Ein-, Zwei- oder Dreiphasen-Elektromaschine, beispielsweise eine Permanentmagnetmaschine (PM) oder eine geschaltete Reluktanzmaschine (Switched Reluctance Machine, SRM), gestaltet sein.

Für alle der oben genannten Ausführungsformen kann vorgesehen sein, dass die Hochgeschwindigkeits-Elektromaschine und das Stellelement des Überlagerungsgetriebes koaxial zur Drehachse angeordnet sind, wobei es sich versteht, dass je nach Bauraumverhältnissen im Kraftfahrzeug auch andere Anordnungen denkbar sind.

Die Hochgeschwindigkeits-Elektromaschine ist vorzugsweise als Dreiphasen-Elektromaschine gestaltet, insbesondere als Permanentmagnetsynchronmaschine (PMSM), als Asynchronmaschine (ASM) oder als geschaltete Reluktanzmaschine (Switched Reluctance Machine, SRM). Die Elektromaschine weist einen feststehenden Stator auf sowie den darin drehbaren Hochgeschwindigkeitsrotor, der mit dem Antriebselement des Überlagerungsgetriebes antriebsverbunden ist. Die Hochgeschwindigkeits-Elektromaschine ist so ausgestaltet, dass die erzeugte Drehzahl und/oder das erzeugte Drehmoment variabel eingestellt werden kann. Die Hochgeschwindigkeits-Elektromaschine liefert die Hauptkraft und bestimmt die Drehrichtung des Elektroantriebs. Demgegenüber folgt der Stator der Stellvorrichtung generell der Drehbewegung der Hochgeschwindigkeits-Elektromaschine, wobei die Regelvorrichtung gleichzeitig eine Steuerung der Drehzahl und des Drehmoments des Elektroantriebs ermöglicht. Insofern funktioniert die Anordnung wie ein Getriebe mit stufenloser Übersetzung (Continuously Variable Transmission, CVT).

Das Überlagerungsgetriebe kann in Form eines Planetengetriebes gestaltet sein, das ein Sonnenrad, mehrere Planetenräder, ein Planetenträger und ein Hohlrad aufweist. Dabei kann insbesondere vorgesehen sein, dass das Sonnenrad mit dem Antriebselement verbunden ist oder dieses bildet, das Hohlrad mit dem Stellelement verbunden ist oder dieses bildet, und der Planetenträger mit dem Abtriebselement verbunden ist oder dieses bildet. Es versteht sich, dass prinzipiell auch eine andere Zuordnung möglich ist, beispielsweise, dass das Hohlrad mit dem Abtriebselement verbunden ist und der Planetenträger mit dem Stellelement.

Das Hohlrad und das Stellelement können einteilig hergestellt oder fest miteinander verbunden sein, was mittels üblicher formschlüssiger Verbindungen wie Schraub- oder Welle-Nabe-Verbindungen, kraftschlüssiger Verbindungen wie Presspassungen, stoffschlüssige Verbindungen wie Schweißen, oder Kombinationen der vorgenannten Möglichkeiten erfolgen kann. Der Rotor der elektromagnetischen Stellvorrichtung kann an einer Außenfläche des Stellelements befestigt sein.

Das Überlagerungsgetriebe kann als Zahnradgetriebe gestaltet sein, das heißt Sonnenrad, Planetenräder und Hohlrad sind als Zahnräder gestaltet und miteinander in Verzahnungseingriff. Alternativ kann das Überlagerungsgetriebe auch als Wälzkörpergetriebe gestaltet sein, das heißt die Drehmomentübertragung zwischen einzelnen Elementen des Getriebes erfolgt über kraftschlüssige Verbindungen. Das Sonnenrad, die Planetenräder und das Hohlrad sind dabei als rotationssymmetrische Wälzkörper gestaltet, die gegeneinander abrollen. Konkret haben das Sonnenrad und die Planetenräder jeweils zylindrische Außenflächen, welche miteinander kraftschlüssig beziehungsweise reibschlüssig in Verbindung stehen. Das Hohlrad hat eine zylindrische Innenfläche, die mit den Außenflächen der Planetenräder in Reibkontakt ist. Die Funktionsweise des Wälzkörpergetriebes ist im Übrigen gleich wie die eines entsprechenden Zahnradgetriebes, mit dem einzigen Unterschied, dass Drehmomente durch kraftschlüssige anstelle von formschlüssigen Verbindungen übertragen werden. Derartige Wälzkörpergetriebe, welche auch als Traction Drive bezeichnet werden, zeichnen sich durch geringe Laufgeräusche aus.

Nach einer Ausführung kann vorgesehen sein, dass sich der Stator der elektromagnetischen Stellvorrichtung und der Stator der Hochgeschwindigkeits-Elektromaschine zumindest teilweise radial überdecken. Auf diese Weise wird ein kompakter Aufbau erreicht. Insbesondere kann das Planetengetriebe radial innerhalb der Stellvorrichtung angeordnet sein, wobei sich der Rotor der Stellvorrichtung und die Planetenräder mit axialer Überdeckung angeordnet sein können.

Die Lösung der oben genannten Aufgabe besteht weiter in einem Verfahren zur Steuerung der oben genannten Elektroantriebsanordnung, die nach einer oder mehrerer der genannten Ausführungsformen gestaltet sein kann, mit den Schritten: Ansteuern der Hochgeschwindigkeits-Elektromaschine derart, dass der Hochgeschwindigkeitsrotor mit einer Drehzahl von mindestens 20.000 Umdrehungen pro Minute rotiert; Ansteuern der elektromagnetischen Stellvorrichtung im Motorbetrieb zur Erzeugung einer variablen Drehzahl des Stellelements, wobei sich die Drehzahl der Hochgeschwindigkeits-Elektromaschine und die variable Drehzahl des Stellelements zum Antreiben des Abtriebselements überlagern; wobei die variable Drehzahl des Stellelements mittels der elektromagnetischen Stellvorrichtung derart eingestellt wird, dass das Abtriebselement mit einer Solldrehzahl rotiert.

Nach einer Verfahrensführung können folgende Schritte vorgesehen sein: Ansteuern der elektromagnetischen Stellvorrichtung im Generatorbetrieb derart, dass eine überschüssige kinetische Energie des Hochgeschwindigkeitsrotors zumindest teilweise in elektrische Energie umgewandelt wird; und Speichern der elektrischen Energie in einer Batterie. Die kinetische Energie kann entweder allein durch den Hochgeschwindigkeitsrotor oder gegebenenfalls durch den Hochgeschwindigkeitsrotor zusammen mit einer hiermit verbundenen Zusatzmasse generiert werden.

Bevorzugte Ausführungsbeispiele werden nachstehend anhand der Zeichnungsfiguren erläutert. Hierin zeigt:
- Figur 1: eine erfindungsgemäße Elektroantriebsanordnung in einer ersten Ausführungsform im Halblängsschnitt;
- Figur 2: die elektromagnetische Stellvorrichtung der Elektroantriebsanordnung aus Figur 1 in Axialansicht;
- Figur 3: die elektromagnetische Stellvorrichtung aus Figur 2 im Längsschnitt gemäß Schnittlinie III-III;
- Figur 4: den Stator der elektromagnetischen Stellvorrichtung gemäß Figur 2 in perspektivischer Darstellung;
- Figur 5: den Rotor der elektromagnetischen Stellvorrichtung gemäß Figur 2 in perspektivischer Darstellung;
- Figur 6: eine elektromagnetische Stellvorrichtung in einer abgewandelten Ausführungsform in Axialansicht;
- Figur 7: die elektromagnetische Stellvorrichtung aus Figur 6 im Längsschnitt gemäß Schnittlinie VII-VII;
- Figur 8: den Stator der elektromagnetischen Stellvorrichtung gemäß Figur 6 in perspektivischer Darstellung;
- Figur 9: eine erfindungsgemäße Elektroantriebsanordnung in einer zweiten Ausführungsform im Halblängsschnitt;
- Figur 10: eine erfindungsgemäße Elektroantriebsanordnung in einer dritten Ausführungsform im Halblängsschnitt;
- Figur 11: eine Elektroantriebsanordnung gemäß Figur 1, Figur 9 oder Figur 10 in schematischer Darstellung;
- Figur 12: eine Antriebsstranganordnung mit einer erfindungsgemäßen Elektroantriebsanordnung gemäß Figur 11.

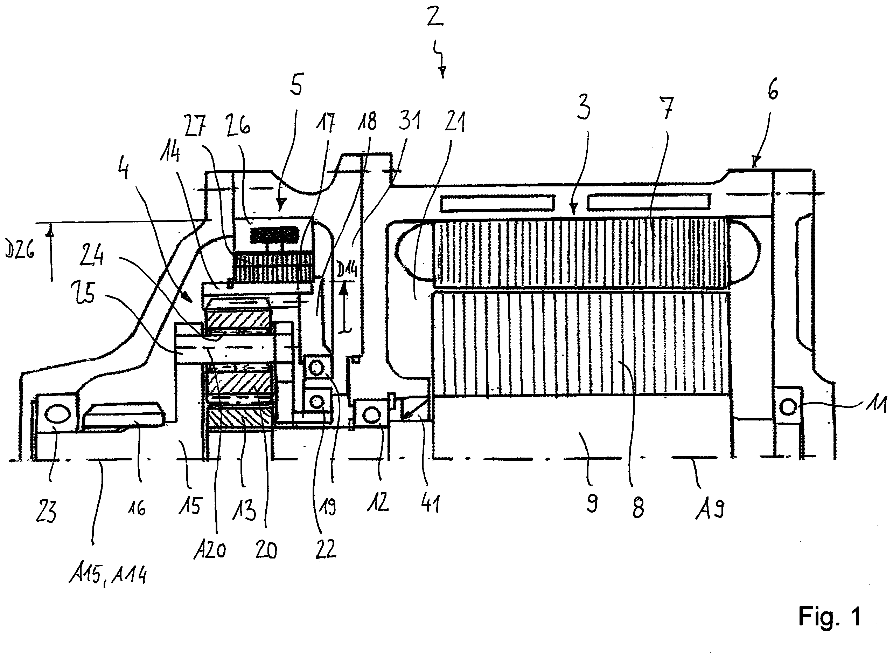

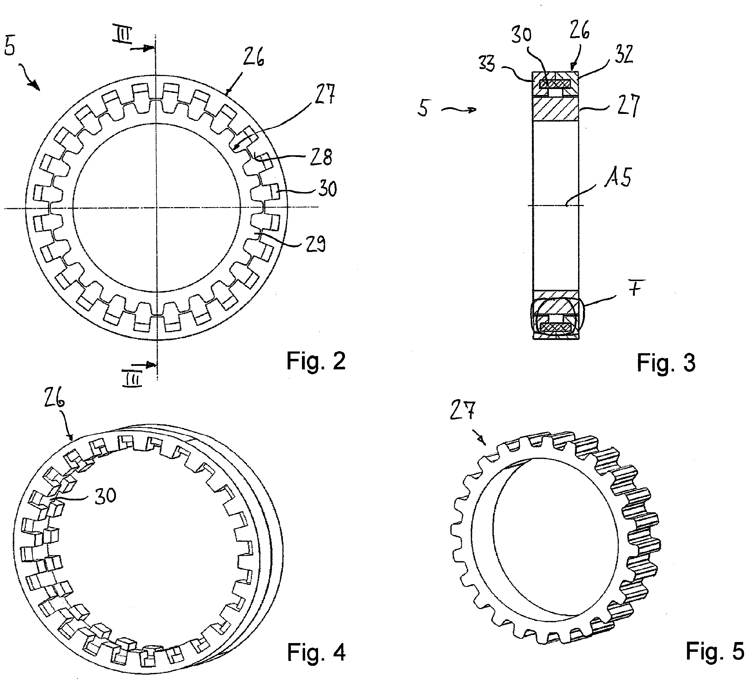

Die Figuren 1 bis 5 werden im Folgenden gemeinsam beschrieben. Figur 1 zeigt eine erfindungsgemäße Elektroantriebsanordnung 2 zum Antreiben eines Kraftfahrzeugs in einer ersten Ausführungsform im Halblängsschnitt. Die Elektroantriebsanordnung 2 umfasst eine elektrische Maschine 3, ein Überlagerungsgetriebe 4, das mit der elektrischen Maschine 3 antriebsverbunden ist, und eine elektromagnetische Stellvorrichtung 5 zum Steuern der Drehzahl der Elektroantriebsanordnung 2. Die Stellvorrichtung 5 ist im Detail in den Figuren 2 bis 5 dargestellt. Die elektrische Maschine 3, das Überlagerungsgetriebe 4 und die Stellvorrichtung 5 sind in einem Gehäuse 6 aufgenommen, das mehrteilig gestaltet sein kann.

Die elektrische Maschine 3 dient als primäre Antriebsquelle und bestimmt die Drehrichtung der Elektroantriebsanordnung 2, wobei die Stellvorrichtung 5 gegebenenfalls als sekundäre Antriebsquelle betrieben werden kann, worauf weiter unten noch näher eingegangen wird. Die Steuerung der elektrischen Maschine 3 erfolgt mittels einer elektronischen Regeleinheit (ECU). Zur Stromversorgung ist die elektrische Maschine 3 mit einer Batterie (nicht dargestellt) zu verbinden. Die elektrische Maschine 3 hat eine Nenndrehzahl von mindestens 20.000 Umdrehungen pro Minute (U/min) und ist insofern als Hochgeschwindigkeits-Elektromaschine gestaltet. Es sind auch Nenndrehzahlen von mindestens 25.000 U/min denkbar, wobei Spitzendrehzahlen sogar über 30.000 U/min liegen können. Die elektrische Maschine 3 weist einen Stator 7 auf, der mit dem Gehäuse 6 fest verbunden ist und auch als erster Stator bezeichnet werden kann, sowie einen Hochgeschwindigkeitsrotor 8, der mit einer Motorwelle 9 zur Drehmomentübertragung fest verbunden ist. Die Motorwelle 9 ist mittels erster und zweiter Lager 11, 12 um die Drehachse A9 in dem Gehäuse 6 drehbar gelagert und von dem Hochgeschwindigkeitsrotor 8 drehend antreibbar. Es ist vorgesehen, dass die Hochgeschwindigkeits-Elektromaschine 3 trocken laufend gestaltet ist, das heißt ohne Schmiermittel betrieben wird. Hierfür weist das Gehäuse 6 einen abgedichteten ersten Aufnahmeraum 21 für die Elektromaschine 3 auf. Der Aufnahmeraum 21 ist vorzugsweise zumindest teilweise vakuumisiert, das heißt der Druck ist niedriger als der Umgebungsdruck, so dass sich auch bei hohen Drehzahlen möglichst geringe Reibungsverluste durch Luftreibung ergeben. Beispielsweise kann der Innendruck weniger als 100 Millibar betragen.

Wenn der Bedarf an Antriebsleistung gegenüber der von der elektrischen Maschine 3 zur Verfügung gestellten Leistung reduziert ist, kann der Rotor 8 als Schwungmasse zur Speicherung kinetischer Energie dienen. Dabei ist aufgrund der Ausgestaltung der Maschine als Hochgeschwindigkeits-Elektromaschine mit den damit verbundenen hohen Drehzahlen ein entsprechend großer Betrag an kinetischer Energie speicherbar. Die Menge an verfügbarer kinetischer Energie beziehungsweise der Speicherkapazität der Elektromaschine 3, hängt von der Drehzahl und der Massenträgheit des Hochgeschwindigkeitsrotors 8 ab. Für eine hohe Speicherkapazität ist die Hochgeschwindigkeits-Elektromaschine 3 hinsichtlich Masseträgheit und Nenndrehzahl insbesondere so gestaltet, dass der Hochgeschwindigkeitsrotor eine kinetische Energie von mindestens 50 Kilojoule (kJ) speichern kann. Diese Energiemenge ist als mehr als das 2,5-fache der Speicherkapazität einer herkömmlichen elektrischen Maschine, die bei maximaler Drehzahl eine kinetische Energie von weniger als 20 Kilojoule hat. Die Elektromaschine 3 kann auch eine größere Speicherkapazität haben, beispielsweise mehr als 100 Kilojoule.

Die Hochgeschwindigkeits-Elektromaschine 3 ist vorzugsweise als Dreiphasen-Elektromaschine gestaltet, das heißt sie wird mit Dreiphasenwechselstrom betrieben. Beispielsweise kann die Elektromaschine als Permanentmagnetsynchronmaschine (PMSM), als Asynchronmaschine (ASM) oder als geschaltete Reluktanzmaschine (Switched Reluctance Machine, SRM) gestaltet sein.

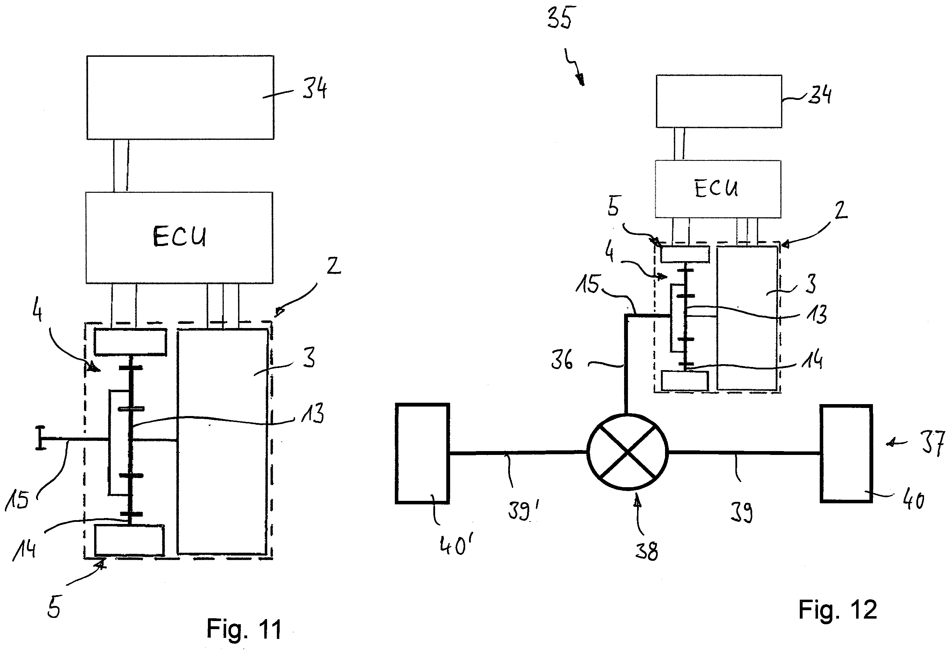

Das Überlagerungsgetriebe 4 weist ein Antriebselement 13, das mit der elektrischen Maschine 3 antriebsverbunden ist, ein Stellelement 14, das mit der Stellvorrichtung 5 wirkverbunden ist, und ein Abtriebselement 15 auf, das zur Drehmomentübertragung mit einer Antriebsachse des Kraftfahrzeugs (siehe Figur 11) zu verbinden ist. Von den drei genannten Elementen sind jeweils zwei voneinander unabhängig drehbar, das heißt das Getriebe hat zwei Freiheitsgrade. Hieraus resultiert, dass voneinander unabhängige Drehbewegungen von zwei der drei Elemente einander überlagert werden können. Dabei ermöglicht die elektromagnetische Stellvorrichtung 5 durch entsprechendes Einwirken auf die Drehbewegung des Stellelements 14 eine variable Steuerung der Drehzahl und des Drehmoments am Abtriebselement 15 beziehungsweise des hiermit antriebsverbundenen Fahrzeug-Antriebsstrangs. Die an den Elementen im Antriebsstrang jeweils anliegende Leistung P ist eine Funktion des jeweiligen Drehmoments M und der jeweiligen Drehzahl n (P = 2·π·M·n). Hieraus folgt, dass das an der Stellvorrichtung 5 anliegende Moment M5 abhängig ist von dem an der Hochgeschwindigkeits-Elektromaschine 3 anliegenden Moment M3 und dem Gesamtübersetzungsverhältnis i4 des Überlagerungsgetriebes 4 (M5 = i4·M3).

Das Überlagerungsgetriebe 4 ist in Form eines Planetengetriebes gestaltet, das ein Sonnenrad 13, mehrere Planetenräder 20, einen Planetenträger 15 und ein Hohlrad 14 aufweist. Die Planetenräder 20 sind in dem Planetenträger 15 auf Planetendrehachsen A20 drehbar gelagert und laufen gemeinsam mit dem Planetenträger 15 um die Drehachse A15 um. Die Planetenräder 20 sind mit dem Sonnenrad 13 und dem Hohlrad 14 in Verzahnungseingriff. Das Sonnenrad bildet das Antriebselement 13, über das ein Antriebsmoment von der elektrischen Maschine 3 in das Planetengetriebe eingeleitet wird, das Hohlrad bildet das Stellelement 14, über welches ein Stellmoment von der Stellvorrichtung 5 eingeleitet wird, während der Planetenträger 15 das Abtriebselement bildet, das mit einem Abtriebsrad 16 zur Drehmomentübertragung auf den im Leistungspfad nachgelagerten Antriebsstrang verbunden ist. Es versteht sich, dass auch eine andere Zuordnung denkbar wäre, beispielsweise, dass das Hohlrad mit dem Abtriebselement verbunden ist und der Planetenträger mit dem Stellelement.

Das Stellelement 14 ist in dem Gehäuse 6 mittels eines Lagers 19 um eine Stellachse A14 drehbar gelagert. Im vorliegenden Ausführungsbeispiel ist die Drehachse A14 des Stellelements 14 koaxial zur Drehachse A9 der Elektromaschine 3 angeordnet beziehungsweise fällt mit dieser zusammen. Es ist jedoch je nach Bauraumverhältnissen auch denkbar, dass die Elektromaschine 3 relativ zum Getriebe 4 so angeordnet ist, dass deren Drehachsen parallel oder winklig zueinander verlaufen. Das Stellelement 14 hat einen Ringabschnitt 17 mit einer Außenfläche sowie einen Flanschabschnitt 18, der an einem axialen Ende des Ringabschnitts 17 mit diesem verbunden ist. Der Ringabschnitt 17 hat eine Außenfläche, an der ein Rotor der Stellvorrichtung 5 drehfest befestigt ist, auf die weiter unten noch näher eingegangen wird. Der Flanschabschnitt 18 ist mittels des Lagers 19 in einem Gehäuseteil des Gehäuses 6 drehbar gelagert. Das Gehäuse 6 weist einen zweiten Aufnahmeraum 31 auf, in dem die Stellvorrichtung 5 und das Überlagerungsgetriebe 4 aufgenommen sind. Die Stellvorrichtung 5 und das Überlagerungsgetriebe 4 sind vorzugsweise nasslaufend, so dass der zweite Aufnahmeraum 31 zumindest teilweise mit Schmiermittel befüllt ist. Die beiden Aufnahmeräume 21, 31 sind mittels der Dichtung 41 gegeneinander abgedichtet.

Der Planetenträger 15 ist mit Lagern 22, 23 in dem Gehäuse 6 um die Trägerachse A15 drehbar gelagert. Die einzelnen Planetenräder 20 sind jeweils mittels Lagern 24 auf mit dem Planetenträger 15 verbundenen Bolzen 25 drehbar gelagert. Der Planetenträger 15 hat an einer der Motorwelle 9 abgewandten Seite einen Hülsenansatz, mit dem das Abtriebsrad 16 drehfest verbunden ist. Das Abtriebsrad 16 treibt eine hier nicht dargestellte Antriebswelle des nachgelagerten Antriebsstranges an.

Die Stellvorrichtung 5 umfasst bei der vorliegenden Ausführungsform eine elektromagnetische Kupplung, die einen mit dem Hohlrad 14 verbundenen Rotor 27 und einen mit dem Gehäuse 6 drehfest verbundenen Stator 26 aufweist, der auch als zweiter Stator bezeichnet werden kann. Wie insbesondere aus den Figuren 2 bis 5 hervorgeht, hat der Stator 26 eine Vielzahl von über den Umfang verteilten Stator-Polen 28 und der Rotor 27 eine Vielzahl von über den Umfang verteilten Rotor-Polen 29. Es ist erkennbar, dass die Stator-Pole 28 durch die Zähne einer inneren Verzahnungsstruktur am Stator 26 gestaltet sind. Die Rotor-Pole 29 sind entsprechend durch die Zähne einer äußeren Verzahnungsstruktur am Rotor 27 gestaltet. Dabei sind zwischen den Zahnköpfen der Stator-Pole 28 und den Zahnköpfen der Rotor-Pole 29 ein Radialspalt gebildet, das heißt Stator 26 und Rotor 27 übertragen Magnetkräfte beziehungsweise Drehmoment berührungslos. Die Anzahl der Stator- und Rotorpole 28, 29 ist vorliegend gleich, kann aber prinzipiell auch unterschiedlich sein. Der Rotor 27 ist aus magnetischem Material wie Weicheisen oder Elektroblech hergestellt. Der Stator 26 weist eine Magnetspule 30 auf, die durch Bestromen ein Magnetfeld erzeugt. Das Magnetfeld wirkt von den Stator-Polen 28 auf die Rotor-Pole 29 ein, so dass auf den Rotor 27 ein Drehmoment ausgeübt wird. Der Stator 26 der elektromagnetischen Kupplung 5 umfasst vorliegend ein erstes Ringteil 32 und ein zweites Ringteil 33 aus magnetischem Material, die im Halblängsschnitt betrachtet etwa C-förmig gestaltet sind. Dabei bildet eines der beiden Ringteile 32, 33 einen magnetischen N-Pol, während der andere einen magnetischen S-Pol bildet. Axial zwischen den beiden Ringteilen 32, 33 ist die Magnetspule 30 aufgenommen, welche bei Bestromung ein Magnetfeld F erzeugt.

Die Magnetspule 30 wird mittels einer elektronischen Regeleinheit (ECU) gesteuert, wobei das Stellmoment durch Steuerung des durch die Magnetspule 30 fließenden Stromes variabel einstellbar ist. Das Ansprechverhalten der elektromagnetischen Kupplung 5 ist extrem schnell, entsprechend dem Aufbau des Magnetfeldes. Die Drehzahl des Rotors 27 wird durch Pulsieren des Stroms der Magnetspule 30 eingestellt, wobei durch entsprechendes Steuern des Stromes ein weiches Zu- und Abschalten der Kupplung und eine präzise Regelbarkeit des Stellmoments realisierbar sind. In nicht-bestromtem Zustand der Magnetspule 30 kann der Rotor 27 gegenüber dem Stator 26 frei drehen, so dass ein gegebenenfalls vom Primärantrieb 3 eingeleitetes Drehmoment nicht abgestützt wird. Durch Bestromen der Magnetspule 30 kann der Rotor gegenüber dem Stator ortsfest gehalten werden, so dass ein vom Primärantrieb 3 eingeleitetes Drehmoment abgestützt und auf das Abtriebselement 15 übertragen wird. Durch entsprechendes Pulsieren des Spulenstroms kann der Rotor 27 auch gegenüber dem Stator 26 vor- oder nachlaufen, so dass die Drehzahl der Elektroantriebsanordnung bedarfsweise gesteuert werden kann. Übersteigt das in das insgesamt in den Antriebsstrang eingeleitete Drehmoment den eingestellten Spulenstrom, so dreht sich der Rotor 27 relativ zum Stator 26. In diesem Fall bildet die elektromagnetische Kupplung 5 eine Überlastsicherung.

Es ist erkennbar, dass die Größenverhältnisse der Anordnung derart sind, dass der Stator 26 der Stellvorrichtung 5 einen größten Außendurchmesser D26 respektive einen kleinsten Innendurchmesser aufweist, der größer ist als ein größter Außendurchmesser D14 des Hohlrads 14. Ferner hat der Stator 26 der Stellvorrichtung 5 eine radiale Überdeckung mit dem Stator 7 der primären elektrischen Maschine 3. Durch diese Ausgestaltungen liegt der Stator 26 der Stellvorrichtung 5 auf einem relativ großen Durchmesser, so dass die Magnetkräfte beziehungsweise der Strom in der Stellvorrichtung verhältnismäßig gering sein können.

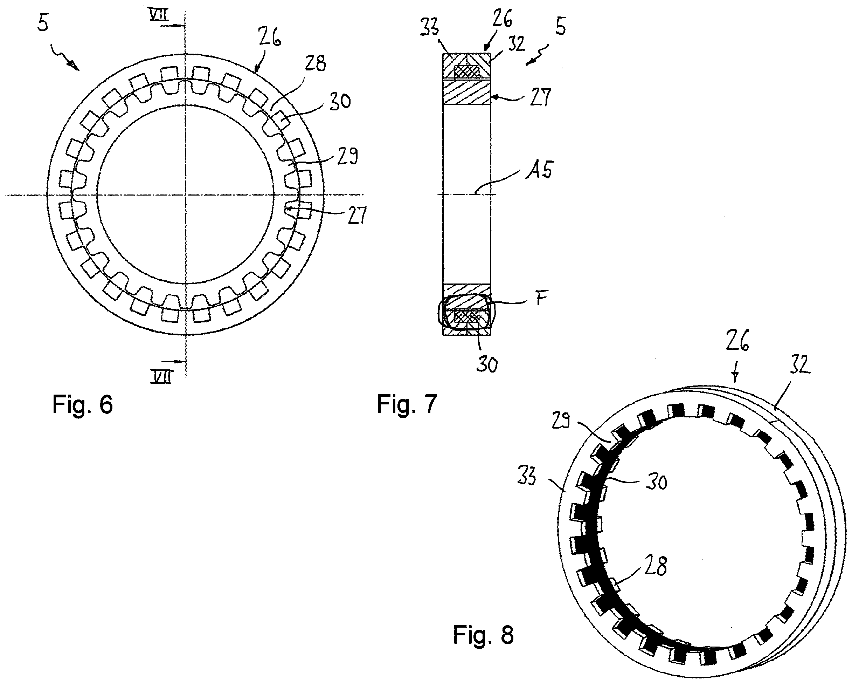

Die Figuren 6 bis 8 zeigen eine elektromagnetische Kupplung in einer gegenüber der Ausführung gemäß den Figuren 2 bis 5 leicht abgewandelten Ausführung. Die vorliegende Ausführung gemäß den Figuren 6 bis 8, welche anstelle der in Figur 1 gezeigten elektromagnetischen Kupplung eingesetzt werden kann, entspricht weitestgehend der obigen Ausführungsform, so dass hinsichtlich der Gemeinsamkeiten auf die obige Beschreibung Bezug genommen wird. Dabei sind gleiche beziehungsweise einander entsprechende Einzelheiten mit gleichen Bezugszeichen versehen.

Der einzige Unterschied der Ausführung gemäß den Figuren 6 bis 8 besteht in der Ausgestaltung des Stators 26. Dieser weist vorliegend im Halblängsschnitt betrachtet L-förmige Ringteile 32, 33 auf, welche die Magnetspule 30 seitlich umfassen. Dabei entspricht der Innendurchmesser der Magnetspule 30 dem Innendurchmesser der Ringteile 32, 33. Verglichen mit der obigen Ausführung ist der radiale Ringspalt zwischen der Magnetspule 30 und dem Rotor 27 deutlich reduziert. Der Rotor 27 ist identisch gestaltet wie bei der obigen Ausführungsform.

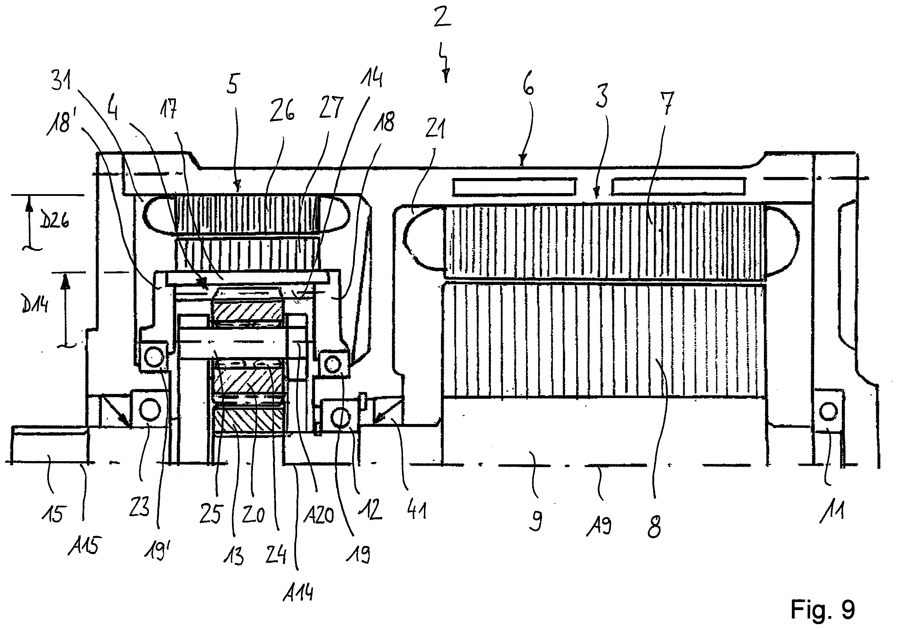

Die Figur 9 zeigt eine erfindungsgemäße Elektroantriebsanordnung in einer zweiten Ausführungsform. Diese entspricht in weiten Teilen derjenigen gemäß den Figuren 1 bis 5, auf deren Beschreibung hinsichtlich der Gemeinsamkeiten insofern Bezug genommen wird. Dabei sind gleiche beziehungsweise einander entsprechende Einzelheiten mit gleichen Bezugszeichen versehen, wie in Figur 1.

Eine Besonderheit der vorliegenden Ausführungsform gemäß Figur 9 besteht in der Ausgestaltung der elektromagnetischen Stellvorrichtung 5, welche vorliegend in Form einer elektrischen Maschine gestaltet ist. Die elektrische Maschine 5 bildet eine sekundäre elektrische Maschine der Elektroantriebsanordnung, das heißt, die primäre elektrische Maschine 3 hat eine höhere Nennleistung und gibt das Antriebsmoment, die Antriebsleistung und die Antriebsdrehrichtung im Wesentlichen vor, während die sekundäre elektrische Maschine eine geringere Nennleistung hat und zum Einstellen der genauen Drehzahl beziehungsweise des Antriebsmoments dient. Konkret kann die sekundäre Elektromaschine 3 in Form einer Einphasen-Elektromaschine gestaltet sein, wobei prinzipiell auch Zwei- oder Dreiphasen-Elektromaschinen wie beispielsweise eine Permanentmagnetmaschine (PM) oder eine geschaltete Reluktanzmaschine (Switched Reluctance Machine, SRM) einsetzbar sind.

Die sekundäre elektrische Maschine 5 kann im Generatorbetrieb oder im Motorbetrieb betrieben werden, wobei die Ansteuerung mittels einer elektronischen Regeleinheit (ECU) erfolgt. Insbesondere ist vorgesehen, dass die sekundäre elektrische Maschine 5 als Niedriggeschwindigkeits-Elektromaschine gestaltet ist, die eine relativ niedrige Nenndrehzahl von beispielsweise weniger als 500 Umdrehungen pro Minute, aber ein vergleichsweise hohes Nenndrehmoment aufweist (Low Speed / High Torque Machine). Im Generatorbetrieb kann die sekundäre Elektromaschine 5 eine überschüssige mechanische Energie der Hochgeschwindigkeits-Elektromaschine 3 in elektrischen Strom umwandeln. Hierfür ist eine Batterie 34 vorgesehen, mit der die sekundäre Elektromaschine 5 verbunden ist, um den im Generatorbetrieb erzeugten elektrischen Strom zu speichern. Die sekundäre Elektromaschine 5 ist alternativ im Motorbetrieb steuerbar, wobei der Stator 26 durch elektrische Energie angetrieben wird, um Drehmoment in das Stellelement 14 des Überlagerungsgetriebes 4 einzuleiten. In diesem Fall werden die von der sekundären Elektromaschine 5 und von der primären Elektromaschine 3 erzeugten Drehmomente beziehungsweise Drehzahlen einander überlagert und gemeinsam auf das Abtriebselement 15 übertragen.

Die primäre Elektromaschine 3 und die sekundäre Elektromaschine 5 sind koaxial zueinander angeordnet, wobei die sekundäre Elektromaschine 5 mit dem Stator 7 der primären Elektromaschine 3 zumindest teilweise eine radiale Überdeckung hat. Es ist ferner erkennbar, dass das Überlagerungsgetriebe 4 koaxial und radial innerhalb der sekundären Elektromaschine 5 angeordnet ist. Dabei ist der Rotor 27 der Elektromaschine 5 an der Außenfläche des Stellelements 14 befestigt, so dass beide gemeinsam um die Drehachse A14 rotieren. Das Stellelement beziehungsweise Hohlrad 14 hat zwei Flanschabschnitte 18, 18', mit denen es über Lager 19, 19' im Gehäuse 6 um die Drehachse A14 drehbar gelagert ist. Die Planetenräder 20 sind mit axialer Überdeckung zur Elektromaschine 5 angeordnet. Insgesamt ergibt sich durch diesen Aufbau eine kompakte Anordnung, wobei es sich versteht, dass je nach Bauraumverhältnissen im Kraftfahrzeug auch andere Ausgestaltungen denkbar sind.

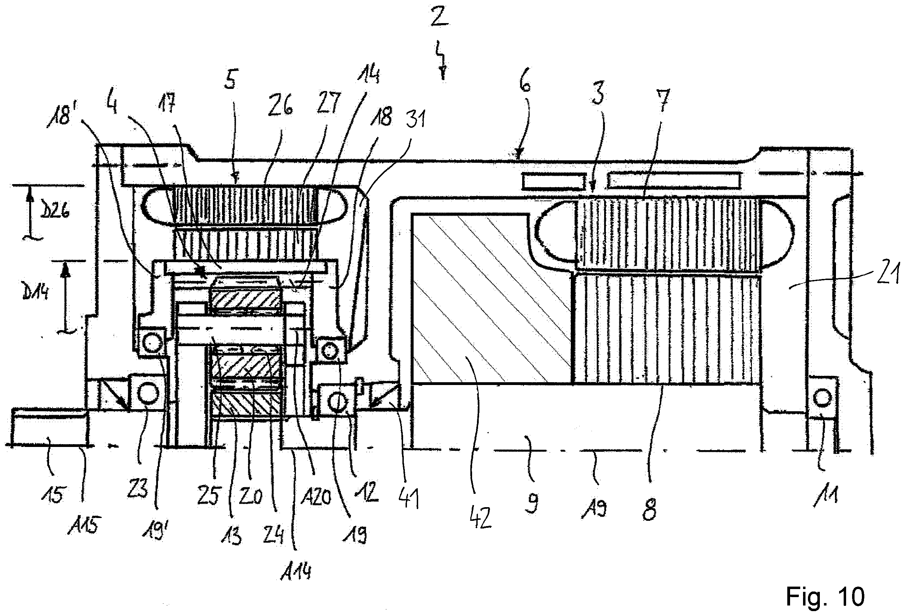

Die Figur 10 zeigt eine erfindungsgemäße Elektroantriebsanordnung in einer dritten Ausführungsform. Diese entspricht weitestgehend derjenigen gemäß Figur 9, auf deren Beschreibung hinsichtlich der Gemeinsamkeiten insofern Bezug genommen wird. Dabei sind gleiche beziehungsweise einander entsprechende Einzelheiten mit gleichen Bezugszeichen versehen, wie in Figur 9 beziehungsweise in Figur 1.

Ein Unterschied gegenüber der Ausführungsform gemäß Figur 9 besteht bei der vorliegenden Ausführungsform gemäß Figur 10 darin, dass eine Zusatzmasse 42 zur Erhöhung der Massenträgheit und damit der Speicherfähigkeit der Hochgeschwindigkeits-Elektromaschine 3 vorgesehen ist. Die Zusatzmasse 42 ist mit dem Hochgeschwindigkeitsrotor 8 beziehungsweise der Antriebswelle 9 verbunden ist, so dass die drei genannten Teile gemeinsam miteinander drehen. Durch die Zusatzmasse 42 wird eine höhere Rotationsenergie des Hochgeschwindigkeitsrotors 8 erreicht, so dass die so gestaltete Elektromaschine 3 eine besonders hohe Speicherkapazität hat. Die Speicherkapazität kann dabei über 50 Kilojoule liegen, insbesondere über 100 Kilojoule, je nach Drehzahl der Elektromaschine 3 auch bei mehr als 200 Kilojoule.

Die Figur 11 zeigt eine erfindungsgemäße Elektroantriebsanordnung 2 gemäß Figur 1, Figur 9 beziehungsweise Figur 10 schematisch mit elektronischer Regeleinheit (ECU) und Batterie 34, welche die elektromagnetische Stellvorrichtung 5 und die primäre Elektromaschine 3 mit elektrischer Energie versorgt, beziehungsweise, in der elektrische Energie im Generatorbetrieb speicherbar ist.

Figur 12 zeigt einen erfindungsgemäßen Antriebsstrang 35 mit einer erfindungsgemäßen Elektroantriebsanordnung 2 gemäß Figur 11. Der Antriebsstrang 35 beinhaltet neben der Elektroantriebsanordnung 2 eine Antriebswelle 36 zum Antreiben einer Antriebsachse 37 des Kraftfahrzeugs. Die Antriebsachse 37 umfasst ein Achsdifferential 38 mit einem Differentialrädersatz und zwei Seitenwellen 39, 39', die jeweils mit einem Fahrzeugrad 40, 40' antriebsverbunden sind. Von der Antriebswelle 36 eingeleitetes Drehmoment wird vom Achsdifferential 38 auf die beiden Seitenwellen 39, 39' aufgeteilt.

Die erfindungsgemäße Elektroantriebsanordnung 2 hat in vorteilhafter Weise nur geringe Schleppverluste und damit eine hohe Effizienz. Durch den Einsatz einer elektromagnetischen Stellvorrichtung 5 lässt sich die Drehzahl beziehungsweise das Drehmoment des Antriebstrangs des Elektroantriebs variabel einstellen, so dass die Hochgeschwindigkeits-Elektromaschine in einem besonders effizienten Kennlinienbereich betrieben werden kann. Ferner ist durch die Ausgestaltung der elektromagnetischen Stellvorrichtung ein Überlastschutz gegen auftretende Drehmomentspitzen gegeben. Insgesamt vereinigt der Elektroantrieb die Vorteile einer hohen Effizienz und langen Lebensdauer bei kompakter Bauweise.

### Bezugszeichenliste

- 2: Elektroantriebsanordnung
- 3: elektrische Maschine
- 4: Überlagerungsgetriebe
- 5: Stellvorrichtung
- 6: Gehäuse
- 7: Stator
- 8: Hochgeschwindigkeitsrotor
- 9: Motorwelle
- 11: Lager
- 12: Lager
- 13: Antriebselement / Sonnenrad
- 14: Stellelement / Hohlrad
- 15: Abtriebselement / Planetenträger
- 16: Abtriebsrad
- 17: Ringabschnitt
- 18, 18': Flanschabschnitt
- 19, 19': Lager
- 20: Planetenräder
- 21: erster Aufnahmeraum
- 22: Lager
- 23: Lager
- 24: Lager
- 25: Bolzen
- 26: Stator
- 27: Rotor
- 28: Stator-Pole
- 29: Rotor-Pole
- 30: Magnetspule
- 31: zweiter Aufnahmeraum
- 32: erstes Ringteil
- 33: zweites Ringteil
- 34: Batterie
- 35: Antriebsstrang
- 36: Antriebswelle
- 37: Antriebsachse
- 38: Achsdifferential
- 39, 39': Seitenwelle
- 40, 40': Fahrzeugrad
- 41: Dichtung
- 42: Zusatzmasse

- A: Drehachse
- D: Durchmesser
- F: Magnetfeld
- i: Übersetzung
- M: Drehmoment
- n: Drehzahl
- P: Leistung

## Patentansprüche

1. Elektroantriebsanordnung zum Antreiben eines Kraftfahrzeugs, umfassend:
eine elektrische Maschine (3), die als Hochgeschwindigkeits-Elektromaschine mit einer Nenndrehzahl von mindestens 20.000 Umdrehungen pro Minute gestaltet ist und einen Hochgeschwindigkeitsrotor (8) aufweist, der als Schwungmasse zur Speicherung kinetischer Energie verwendbar ist;
ein Überlagerungsgetriebe (4) mit genau drei Anschlusselementen, nämlich einem Antriebselement (13), einem Stellelement (14) und einem Abtriebselement (15), wobei das Überlagerungsgetriebe (4) in Form eines Planetengetriebes gestaltet ist mit einem Sonnenrad, welches das Antriebselement (13) bildet und von der elektrischen Maschine (3) um eine Antriebsachse (A9) drehend antreibbar ist, mit einem Hohlrad, das mit dem Stellelement (14) verbunden und um eine Stellachse (A14) drehbar ist, und mit einem Planetenträger, der das Abtriebselement (15) bildet und mehrere Planetenräder (20) trägt, über die das Hohlrad und das Sonnenrad antriebsverbunden sind;
eine zum Überlagerungsgetriebe (4) koaxial angeordnete elektromagnetische Stellvorrichtung (5) zum variablen Einstellen einer Drehzahl des Stellelements (14), wobei die elektromagnetische Stellvorrichtung (5) einen mit einem ortsfesten Bauteil (6) verbundenen Stator (26) und einen mit dem Stellelement (14) des Überlagerungsgetriebes (4) drehfest verbundenen Rotor (27) aufweist, wobei der Rotor (27) und der Stator (26) berührungslos zueinander angeordnet sind, wobei die elektromagnetische Stellvorrichtung (5) ausgestaltet ist, um durch in Umfangsrichtung zwischen dem Stator (26) und dem Rotor (27) wirkende magnetische Kräfte ein Stellmoment auf den Rotor (27) zu übertragen, wobei die magnetischen Kräfte variabel einstellbar sind,
**dadurch gekennzeichnet,**
**dass** die Hochgeschwindigkeits-Elektromaschine (3) in einem abgedichteten trockenen ersten Aufnahmeraum (21) angeordnet ist, wobei ein Innendruck im ersten Aufnahmeraum (21) geringer ist als ein Umgebungsdruck, und,
**dass** die elektromagnetische Stellvorrichtung (5) und das Überlagerungsgetriebe (4) in einem abgedichteten mit Schmiermittel befülltem zweiten Aufnahmeraum (31) angeordnet sind, wobei das Überlagerungsgetriebe (4) radial innerhalb der elektromagnetischen Stellvorrichtung (5) angeordnet ist.

2. Elektroantriebsanordnung nach Anspruch 1,
**gekennzeichnet durch** ein Gehäuse (6), wobei das Stellelement (14) zwei Flanschabschnitte (18, 18') aufweist, mit denen es über Lager (19, 19') im Gehäuse (6) drehbar gelagert ist.

3. Elektroantriebsanordnung nach einem der Ansprüche 1 oder 2,
**dadurch gekennzeichnet,**
**dass** eine Zusatzmasse (42) vorgesehen ist, die zumindest mittelbar mit dem Hochgeschwindigkeitsrotor (8) fest verbunden ist, wobei die Zusatzmasse (42) in dem ersten Aufnahmeraum (21) angeordnet ist.

4. Elektroantriebsanordnung nach einem der Ansprüche 1 bis 3,
**dadurch gekennzeichnet,**
**dass** die Hochgeschwindigkeits-Elektromaschine (3) derart gestaltet ist, dass der Hochgeschwindigkeitsrotor (8) eine kinetische Energie von mindestens 50 Kilojoule, insbesondere mindestens 100 Kilojoule, speichern kann.

5. Elektroantriebsanordnung nach einem der Ansprüche 1 bis 4,
**dadurch gekennzeichnet,**
**dass** der Stator (26) der Stellvorrichtung (5) einen größten Außendurchmesser (D26) aufweist, der größer ist als ein Außendurchmesser (D14) des Hohlrads (14) des Überlagerungsgetriebes (4), das koaxial zur Drehachse (A9) angeordnet ist.

6. Elektroantriebsanordnung nach einem der Ansprüche 1 bis 5,
**dadurch gekennzeichnet,**
**dass** der Stator (26) der Stellvorrichtung (5) eine Vielzahl von über den Umfang verteilten Stator-Polen (28) aufweist und der Rotor (27) eine Vielzahl von über den Umfang verteilten Rotor-Polen (29), wobei die Anzahl der Stator-Pole (28) und die Anzahl der Rotor-Pole (29) gleich ist.

7. Elektroantriebsanordnung nach einem der Ansprüche 1 bis 6,
**dadurch gekennzeichnet,**
**dass** die Drehzahl des Rotors (27) durch Pulsieren des Stroms der elektromagnetischen Stellvorrichtung (5) variabel einstellbar ist, und zwar derart, dass der Rotor (27) in derselben oder in entgegengesetzter Drehrichtung dreht wie das Antriebselement (13).

8. Elektroantriebsanordnung nach einem der Ansprüche 1 bis 7,
**dadurch gekennzeichnet,**
**dass** die elektromagnetische Stellvorrichtung (5) nach dem Reluktanzprinzip arbeitet, wobei der Rotor (27) aus magnetischem Material wie Weicheisen besteht und der Stator (26) zumindest eine Magnetspule (30) aufweist, die durch Bestromen ein Magnetfeld erzeugt, wobei insbesondere vorgesehen ist, dass der Stator (26) zumindest ein erstes Ringteil (32) und zumindest ein zweites Ringteil (33) aus magnetischem Material aufweist, zwischen denen die zumindest eine Magnetspule (30) axial aufgenommen ist.

9. Elektroantriebsanordnung nach Anspruch 8,
**dadurch gekennzeichnet,**
**dass** die Stator-Pole (28) durch die Zähne einer inneren Verzahnungsstruktur am Stator (26) gestaltet sind und die Rotor-Pole (29) durch die Zähne einer äußeren Verzahnungsstruktur am Rotor (27) gestaltet sind, wobei zwischen den Zahnköpfen der Stator-Pole (28) und den Zahnköpfen der Rotor-Pole (29) ein Radialspalt gebildet ist.

10. Elektroantriebsanordnung nach einem der Ansprüche 1 bis 4,
**dadurch gekennzeichnet,**
**dass** die elektromagnetische Stellvorrichtung (5) eine sekundäre Elektromaschine (5) aufweist,
wobei die sekundäre Elektromaschine (5) im Generatorbetrieb steuerbar ist, um eine überschüssige mechanische Energie der Hochgeschwindigkeits-Elektromaschine (3) in elektrischen Strom umzuwandeln, wobei der elektrische Strom in einer Batterie (34) speicherbar oder in die Hochgeschwindigkeits-Elektromaschine (3) einspeisbar ist, und/oder
wobei die sekundäre Elektromaschine (5) im Motorbetrieb steuerbar ist, wobei der Rotor (27) durch elektrische Energie in Drehrichtung des Antriebselements (13) angetrieben wird, um Drehmoment in das Stellelement (14) des Überlagerungsgetriebes (4) einzuleiten, wobei die elektrische Energie aus der Batterie (34) entnommen wird oder von der Hochgeschwindigkeits-Elektromaschine (3) bereitgestellt wird.

11. Elektroantriebsanordnung nach einem der Ansprüche 1 bis 10,
**dadurch gekennzeichnet,**
**dass** die Hochgeschwindigkeits-Elektromaschine (3) und das Stellelement (14) des Überlagerungsgetriebes (4) koaxial zur Antriebsdrehachse (A9) angeordnet sind und/oder,
**dass** der Stator (26) der elektromagnetischen Stellvorrichtung (5) und der Stator (8) der elektrischen Maschine (3) sich zumindest teilweise radial überdecken.

12. Elektroantriebsanordnung nach einem der Ansprüche 1 bis 11,
**dadurch gekennzeichnet,**
**dass** die Hochgeschwindigkeits-Elektromaschine (3) als Dreiphasen-Elektromaschine gestaltet ist und einen feststehenden Stator (7) aufweist, in dem der Hochgeschwindigkeitsrotor (8) drehbar angeordnet ist, wobei der Hochgeschwindigkeitsrotor (8) mit dem Antriebselement (13) des Überlagerungsgetriebes (4) antriebsverbunden ist.

13. Elektroantriebsanordnung nach einem der Ansprüche 1 bis 12,
**dadurch gekennzeichnet,**
**dass** das Hohlrad und das Stellelement (14) einteilig gestaltet sind, wobei der Rotor (27) der elektromagnetischen Stellvorrichtung (5) drehfest an einer Außenfläche des Stellelements (14) befestigt ist.

14. Verfahren zur Steuerung einer Elektroantriebsanordnung nach einem der Ansprüche 1 bis 13 mit den Schritten:
Ansteuern der Hochgeschwindigkeits-Elektromaschine (3) derart, dass der Hochgeschwindigkeitsrotor (8) mit einer Drehzahl von mindestens 20.000 Umdrehungen pro Minute rotiert;
Ansteuern der elektromagnetischen Stellvorrichtung (5) im Motorbetrieb zur Erzeugung einer variablen Drehzahl des Stellelements (14), wobei sich die Drehzahl der Hochgeschwindigkeits-Elektromaschine (3) und die variable Drehzahl des Stellelements (14) zum Antreiben des Abtriebselements (13) überlagern;
wobei die variable Drehzahl des Stellelements (14) mittels der elektromagnetischen Stellvorrichtung (5) derart eingestellt wird, dass das Abtriebselement (15) mit einer Solldrehzahl rotiert.

15. Verfahren nach Anspruch 14, mit den Schritten:
Ansteuern der elektromagnetischen Stellvorrichtung (5) im Generatorbetrieb derart, dass eine überschüssige kinetische Energie des Hochgeschwindigkeitsrotors (8) zumindest teilweise in elektrische Energie umgewandelt wird; und Speichern der elektrischen Energie in einer Batterie (34).

## Claims

1. An electric drive assembly for driving a motor vehicle, comprising:
an electric machine (3) which is configured as a high-speed electric machine with a nominal speed of at least 20,000 revolutions per minute and is provided with a high-speed rotor (8) which is usable as a flywheel mass to store kinetic energy;
a superimposed transmission (4) with exactly three connecting elements, i.e. a drive element (13), a regulating element (14) and a driven element (15), wherein the superimposed transmission (4) is configured in the form of a planetary transmission with a sun gear that forms the drive element (13) and that is rotatingly driveable by the electric machine (3) around a driving axis (A9), and with a hollow gear that is connected to the regulating element (14) and is rotatable around a regulating axis (A14), and with a planetary carrier (20) that forms the driven element (15) and carries a plurality of planetary gears (20) via which the hollow gear and the sun are drivingly connected;
an electro-magnetic regulating device (5) that is coaxially arranged relative to the superimposed transmission (4) and provided for variably regulating a rotational speed of the regulating element (14), wherein the electromagnetic regulating device (5) comprises a stator (26) that is connected to a stationary component (6) and a rotor (27) that is connected to the regulating element (14) of the superimposed transmission (4) in a rotationally fixed way, wherein the rotor (27) and the stator (26) are contactless arranged relative to each other, wherein the electromagnetic regulating device (5) is configured to transmit a regulating torque to the rotor (27) by magnetic forces acting in circumferential direction between the stator (26) and the rotor (27), wherein the magnetic forces are variably adjustable,
**characterised in**
**that** the high-speed electric machine (3) is arranged in a sealed dry first receiving chamber (21), wherein an internal pressure in the first receiving chamber (21) is lower than an environmental pressure, and
**that** the electromagnetic regulating device (5) and the superimposed transmission (4) are arranged in a sealed second receiving chamber (31) filled with lubricant, wherein the superimposed transmission (4) is arranged radially inside the electromagnetic regulating device (5).

2. An electric drive assembly according to claim 1,
**characterised by** a housing (6), wherein the regulating element (14) comprises two flange portions (18, 18') by which, via bearings (19, 19'), it is rotatably supported in the housing (6).

3. Electric drive assembly according to any one of claims 1 or 2,
**characterised in**
**that** an additional mass (42) is provided that is at least indirectly firmly connected to the high-speed rotor (8), wherein the additional mass (42) is arranged in the first receiving chamber (21).

4. Electric drive assembly according to any one of claims 1 to 3,
**characterised in**
**that** the high-speed electric machine (3) is configured such that the high-speed rotor (8) can store a kinetic energy of at least 50 kilo-joule, in particular at least 100 kilo-joule.

5. Electric drive assembly according to any one of claims 1 to 4,
**characterised in**
**that** the stator of the regulating device (5) comprises a greatest outer diameter (D26) that is greater than an outer diameter (D14) of the hollow gear (14) of the superimposed transmission (4) that is arranged coaxially relative to the axis of rotation (A9).

6. Electric drive assembly according to any one of claims 1 to 5,
**characterised in**
**that** the stator (26) of the regulating device (5) comprises a plurality of circumferentially distributed stator poles (28) and the rotor (27) comprises a plurality of circumferentially distributed rotor poles (29), wherein the number of stator poles (28) is identical to the number of rotor poles (29).

7. Electric drive assembly according to any one of claims 1 to 6,
**characterised in**
**that** the rotational speed of the rotor (27) is variably adjustable by pulsing of the current of the electromagnetic regulating device (5) in such a way that the rotor (27) rotates in the same or in opposed direction of rotation as the drive element (13).

8. Electric drive assembly according to any one of claims 1 to 7,
**characterised in**
**that** the electromagnetic regulating device (5) operates according to the principle of reluctance, wherein the rotor (27) consists of a magnetic material such as soft iron and the stator (26) comprises at least one magnetic coil (30) which, upon being energized, generates a magnetic field, wherein in particular it is provided that the stator (26) comprises at least one first ring part (32) and at least one second ring part (33) made of a magnetic material, between which the at least one magnetic coil (30) is axially received.

9. Electric drive assembly according to claim 8,
**characterised in**
**that** the stator poles (28) are formed by the teeth of an inner tooth structure at the stator (26) and that the rotor poles (29) are formed by the teeth of an outer tooth structure at the rotor (27), wherein a radial gap is formed between the tooth heads of the stator poles (28) and the tooth heads of the rotor poles (29).

10. Electric drive assembly according to any one of claims 1 to 4,
**characterised in**
**that** the electromagnetic regulating device (5) comprises a secondary electric machine (5),
wherein the secondary electric machine (5) is operable in a generator mode to transform an excess of mechanical energy of the high-speed electric machine (3) into electric current, wherein the electric current is storeable in a battery (34) or is feedable into the high-speed electric machine (3), and/or
wherein the secondary electric machine (5) is operable in a motor mode, wherein the rotor (27) is driven by electric energy in the direction of rotation of the drive element (13) to introduce torque into the regulating element (14) of the superimposed transmission (4), wherein the electric energy is taken from the battery (34) or is provided by the high-speed electric machine (3).

11. Electric drive assembly according to any one of claims 1 to 10,
**characterised in**
**that** the high-speed electric machine (3) and the regulating element (14) of the superimposed transmission (4) are arranged coaxially relative to the rotational driving axis (A9), and/or
**that** the stator (26) of the electromagnetic regulating device (5) and the stator (8) of the electric machine (3) at least partially overlap each other radially.

12. Electric drive assembly according to any one of claims 1 to 11,
**characterised in**
**that** the high-speed electric machine (3) is configured as a three-phase electric machine and comprises a fixed stator (7) in which the high-speed rotor (8) is rotatably arranged, wherein the high-speed rotor (8) is drivingly connected to the drive element (13) of the superimposed transmission (4).

13. Electric drive assembly according to any one of claims 1 to 12,
**characterised in**
**that** the hollow gear and the regulating element (14) are formed in one piece, wherein the rotor (27) of the electromagnetic regulating device (5) is attached to an outer face of the regulating element (14) in a rotationally fixed manner.

14. A method of controlling an electric drive assembly according to any one of claims 1 to 13 with the following steps:
controlling the high-speed electric machine (3) such that the high-speed rotor (8) rotates at a speed of at least 20,000 revolutions per minute;
controlling the electromagnetic stetting device (5) in a motor mode for generating a variable rotational speed of the regulating element (14), wherein the rotational speed of the high-speed electric machine (3) and the variable rotational speed of the regulating element (14) superimpose one another for driving the driven element (13);
wherein the variable speed of the regulating element (14) is set by the electromagnetic regulating device (5) such that the drive element (13) rotates at a nominal speed.

15. Method according to claim 14, comprising the steps:
controlling the electromagnetic regulating device (5) in a generator mode such that an excess of kinetic energy of the high-speed rotor (8) is at least partially converted into electric energy; and storing the electric energy in a battery (34).

## Revendications

1. Disposition de propulsion électrique pour entraîner un véhicule automobile, comprenant :
un moteur électrique (3), qui est structuré comme moteur électrique à grande vitesse avec un régime nominal d'au moins 20 000 tours par minute et comporte un rotor à grande vitesse (8), qui peut être utilisé comme masse centrifuge pour accumuler de l'énergie cinétique,
une transmission superposée (4) avec exactement trois éléments de raccordement, notamment un élément d'entraînement (13), un élément de réglage (14) et un élément de sortie (15), la transmission superposée (4) étant structurée en forme de boîte épicycloïdale avec un pignon planétaire, lequel forme l'élément d'entraînement (13) et peut être entraîné en rotation par le moteur électrique (3) autour d'un axe d'entraînement (A9), avec une roue à denture intérieure, qui est reliée à l'élément de réglage (14) et peut tourner autour d'un axe de réglage (A14) et avec un porte-satellites, qui forme l'élément de sortie (15) et porte plusieurs satellites (20) par le biais desquels la roue à denture intérieure et le pignon planétaire sont reliés en entraînement,
un dispositif de réglage électromagnétique (5) disposé coaxialement par rapport à la transmission épicycloïdale (4) pour le réglage variable d'un régime de l'élément de réglage (14), le dispositif de réglage électromagnétique (5) comportant un stator (26) relié à un composant (6) fixe et un rotor (27) relié solidaire en rotation à l'élément de réglage (14) de la transmission épicycloïdale (4), le rotor (27) et le stator (26) étant disposés sans contact l'un par rapport à l'autre, le dispositif de réglage électromagnétique (5) étant structuré pour transmettre un couple de réglage au rotor (27) par des forces magnétiques agissant dans la direction périphérique entre le stator (26) et le rotor (27), les forces magnétiques pouvant être réglées de façon variable,
**caractérisée en ce que**
le moteur électrique à grande vitesse (3) est disposé dans un premier espace de logement (21) sec étanchéifié, une pression intérieure dans le premier espace de logement (21) étant plus faible qu'une pression ambiante et
**en ce que** le dispositif de réglage électromagnétique (5) et la transmission superposée (4) sont disposés dans un deuxième espace de logement (31) étanchéifié rempli de lubrifiant, la transmission superposée (4) étant disposée radialement à l'intérieur du dispositif de réglage électromagnétique (5).

2. Disposition de propulsion électrique selon la revendication 1
**caractérisée par** un boîtier (6), l'élément de réglage (14) comportant deux sections de bride (18, 18') avec lesquelles il est logé dans le boîtier (6) pouvant tourner par le biais des paliers (19,19').

3. Disposition de propulsion électrique selon l'une quelconque des revendications 1 ou 2,
**caractérisée en ce**
**qu'**une masse supplémentaire (42) est prévue, qui est fermement reliée au moins indirectement au rotor à grande vitesse (8), la masse supplémentaire (42) étant disposée dans le premier espace de logement (21).

4. Disposition de propulsion électrique selon l'une quelconque des revendications 1 à 3,
**caractérisée en ce**
**que** le moteur électrique à grande vitesse (3) est structuré de telle sorte que le rotor à grande vitesse (8) peut accumuler une énergie cinétique d'au moins 50 kilojoules, notamment au moins 100 kilojoules.

5. Disposition de propulsion électrique selon l'une quelconque des revendications 1 à 4,
**caractérisée en ce**
**que** le stator (26) du dispositif de réglage (5) comporte un diamètre extérieur (D26) maximum qui est plus grand qu'un diamètre extérieur (D14) de la roue à denture intérieure (14) de la transmission superposée (4), qui est disposée coaxialement à l'axe de rotation (A9) .

6. Disposition de propulsion électrique selon l'une quelconque des revendications 1 à 5,
**caractérisée en ce**
**que** le stator (26) du dispositif de réglage (5) comporte une pluralité de pôles de stator (28) répartis sur la périphérie et le rotor (27) une pluralité de pôles de rotor (29) répartis sur la périphérie, le nombre de pôles de stator (28) étant identique au nombre de pôles de rotor (29).

7. Disposition de propulsion électrique selon l'une quelconque des revendications 1 à 6,
**caractérisée en ce**
**que** le régime du rotor (27) peut être réglé de façon variable par impulsions de courant du dispositif de réglage électromagnétique (5) et de telle sorte que le rotor (27) tourne dans le même sens ou dans le sens opposé de rotation que l'élément d'entraînement (13).

8. Disposition de propulsion électrique selon l'une quelconque des revendications 1 à 7,
**caractérisée en ce**
**que** le dispositif de réglage électromagnétique (5) fonctionne selon le principe de la réluctance, le rotor (27) étant composé d'un matériau magnétique comme du fer doux et le stator (26) comportant au moins une bobine magnétique (30) qui produit un champ magnétique par alimentation en courant, étant notamment prévu que le stator (26) comporte au moins une première partie annulaire (32) et au moins une deuxième partie annulaire (33) en matériau magnétique, entre lesquelles est logée axialement au moins une bobine magnétique (30).

9. Disposition de propulsion électrique selon la revendication 8,
**caractérisée en ce**
**que** les pôles de stator (28) sont structurés sur le stator (26) par les dents d'une structure dentée intérieure et les pôles de rotor (29) sont structurés sur le rotor (27) par les dents d'une structure dentée extérieure, un espace radial étant formé entre les têtes de dent des pôles de stator (28) et les têtes de dent des pôles de rotor (29).

10. Disposition de propulsion électrique selon l'une quelconque des revendications 1 à 4,
**caractérisée en ce**
**que** le dispositif de réglage électromagnétique (5) comporte un moteur électrique secondaire (5),
le moteur électrique secondaire (5) étant piloté dans le fonctionnement de l'alternateur pour convertir en courant électrique une énergie mécanique excédentaire du moteur électrique à grande vitesse (3), le courant électrique pouvant être accumulé dans une batterie (34) ou pouvant servir d'alimentation au moteur électrique à grande vitesse (3), et/ou
le moteur électrique secondaire (5) pouvant être piloté dans le fonctionnement du moteur, le rotor (27) étant entraîné par l'énergie électrique dans le sens de rotation de l'élément d'entraînement (13) pour initier un couple de rotation dans l'élément de réglage (14) de la transmission superposée (4), l'énergie électrique étant prélevée à partir de la batterie (34) ou étant fournie par le moteur électrique à grande vitesse (3).

11. Disposition de propulsion électrique selon l'une quelconque des revendications 1 à 10,
**caractérisée en ce**
**que** le moteur électrique à grande vitesse (3) et l'élément de réglage (14) de la transmission superposée (4) sont disposés coaxialement à l'axe de rotation d'entraînement (A9) et/ou,
en ce que le stator (26) du dispositif de réglage électromagnétique (5) et le stator (8) du moteur électrique (3) se superposent radialement au moins en partie.

12. Disposition de propulsion électrique selon l'une quelconque des revendications 1 à 11,
**caractérisée en ce**
**que** le moteur électrique à grande vitesse (3) est structuré comme un moteur électrique triphasé et comporte un stator fixe (7) dans lequel le rotor à grande vitesse (8) est disposé pouvant tourner, le rotor à grande vitesse (8) étant relié en entraînement à l'élément d'entraînement (13) de la transmission superposée (4).

13. Disposition de propulsion électrique selon l'une quelconque des revendications 1 à 12,
**caractérisée en ce**
**que** la roue à denture intérieure et l'élément de réglage (14) sont structurés en une pièce, le rotor (27) du dispositif de réglage électromagnétique (5) étant fixé solidaire en rotation à une surface extérieure de l'élément de réglage (14).

14. Procédé pour la commande d'une disposition de propulsion électrique selon l'une quelconque des revendications 1 à 13 avec les étapes de :
commande du moteur électrique à grande vitesse (3) de telle sorte que le rotor à grande vitesse (8) tourne à un régime d'au moins 20 000 tours par minute,
commande du dispositif de réglage électromagnétique (5) dans le fonctionnement du moteur pour produire un régime variable de l'élément de réglage (14), le régime du moteur électrique à grande vitesse (3) et le régime variable de l'élément de réglage (14) se superposant pour entraîner l'élément de sortie (13), le régime variable de l'élément de réglage (14) étant réglé au moyen du dispositif de réglage électromagnétique (5) de telle sorte que l'élément de sortie (15) tourne à un régime théorique.

15. Procédé selon la revendication 14 avec les étapes de :
commande du dispositif de réglage électromagnétique (5) dans le fonctionnement d'alternateur de telle sorte qu'une énergie cinétique excédentaire du rotor à grande vitesse (8) est transformée au moins en partie en énergie électrique, et
accumulation de l'énergie électrique dans une batterie (34) .
